(19) Europäisches Patentamt

European Patent Office

Office européen des brevets

(11) **EP 1 707 829 A1**

(12) **EUROPEAN PATENT APPLICATION**
published in accordance with Art. 158(3) EPC

(43) Date of publication:
04.10.2006 Bulletin 2006/40

(51) Int Cl.:
*F16C 11/04* (2006.01)   *F16C 11/10* (2006.01)
*G06F 1/16* (2006.01)   *H04M 1/02* (2006.01)
*H05K 5/02* (2006.01)

(21) Application number: 05703814.3

(22) Date of filing: 19.01.2005

(86) International application number:
PCT/JP2005/000577

(87) International publication number:
WO 2005/071277 (04.08.2005 Gazette 2005/31)

(84) Designated Contracting States:
AT BE BG CH CY CZ DE DK EE ES FI FR GB GR
HU IE IS IT LI LT LU MC NL PL PT RO SE SI SK TR

(30) Priority: 21.01.2004 JP 2004012908

(71) Applicant: SUGATSUNE KOGYO CO., LTD.
Chiyoda-ku
Tokyo 101-8633 (JP)

(72) Inventor: GOTO, Katsumi,
SUGATSUNE KOGYO CO., LTD.
Chiyoda-ku, Tokyo 1018633 (JP)

(74) Representative: Hallybone, Huw George et al
Carpmaels and Ransford,
43-45 Bloomsbury Square
London WC1A 2RA (GB)

(54) **TWO-AXIS HINGE DEVICE**

(57) First and second hinge members 23A, 23B are turnably disposed at an end part on an internal opening side of an outer case 11. The first and second hinge members 23A, 23B are non-turnably provided with first and second gears 24A, 24B, respectively, which are meshed with each other. A movable member 25 is disposed at the inside of the outer case 11 such that the movable member 25 is non-turnable but movable in directions toward and away from the first and second hinge members 23A, 23B. First biasing means for turn biasing the first hinge member 3A in one direction are disposed between the first hinge member 23A and the movable member 25 and between the second hinge member 23B and the movable member 25 respectively.

FIG. 10

EP 1 707 829 A1

## Description

TECHNICAL FIELD

This invention relates to a biaxial hinge device suited to be used for a portable equipment such as a portable telephone set and a notebook type personal computer.

BACKGROUND ART

Recently, in the portable telephone set, a biaxial hinge device having two hinge shafts arranged parallel to each other came to be used as a hinge device for turnably connecting a transmission section and a reception section to each other. The reason is that in the hinge device having only one hinge shaft, the turning range between the transmission section and the reception section is limited to 160 degrees to 170 degrees, while in the biaxial hinge device, the turning range between the transmission section and the reception section can be increased to 360 degrees.
As a biaxial hinge device used in a portable telephone set, a device is known which is disclosed in the underlisted Patent Document 1. In this hinge device, a pair of first hinge shafts are formed on both sides of one end part adjacent to the reception section of the transmission section, and a first gear part is formed between the pair of first hinge shafts. A pair of second hinge shafts are formed on both sides of one end part adjacent to the transmission section of the reception section, and a second gear part is formed between the pair of second hinge shafts. A set of first and second hinge shafts arranged on the same side of the transmission section and reception section are turnably connected respectively to one and the other end parts of a connecting member, and the other set of first and second hinge shafts arranged on the other side are turnably connected respectively to one and the other end parts of another connecting member. Owing to this arrangement, the transmission section and the reception section are turnably connected to each other through the connecting members. In a state where the transmission section and the reception section are turnably connected to each other, the first and second gear parts are meshed with each other. Owing to this arrangement, the reception section is prohibited from freely turning about the first and second hinge shafts and the reception section is turned relative to the transmission section such that the reception section normally draws a constant locus.
Patent Document 1: U.S. Patent No. 5363089

DISCLOSURE OF THE INVENTION

PROBLEM TO BE SOLVED BY THE INVENTION

In the conventional biaxial hinge device, in order to smoothly rotate the first and second gears, an unavoidable backlash is arranged between flanks of the first and second gears. Due to this arrangement, in case the conventional biaxial hinge device is used in a portable telephone set, rattle attributable to the backlash tends to occur between the transmission section and the reception section.

MEANS FOR SOLVING THE PROBLEM

According to the present invention, there is provided, in order to solve the above-mentioned problem, a biaxial hinge device comprising a hinge main body, a first hinge shaft turnably supported by the hinge main body, a second hinge shaft arranged parallel to the first hinge shaft and turnably supported by the hinge main body, a first gear non-turnably disposed at the first hinge shaft and a second gear non-turnably disposed at the second hinge shaft and meshed with the first gear, first turn biasing means adapted to turn bias the first hinge shaft in one direction when the first hinge shaft is located in a predetermined first position being disposed at least at one of between the hinge main body and the first hinge shaft and between the hinge main body and the second hinge shaft.
It is preferable that second turn biasing means adapted to turn bias the first hinge shaft in the other direction when the first hinge shaft is located in a predetermined second position away from the first position in a peripheral direction is disposed at least at one of between the hinge main body and the first hinge shaft and between the hinge main body and the second hinge shaft.
It is also preferable that first turn restricting means adapted to restrict turn of the first hinge shaft with respect to the hinge main body with a predetermined force when the first hinge shaft is located in a predetermined restriction range between the first position and the second position is disposed between the hinge main body and the first hinge shaft, and second turn biasing means adapted to restrict turn of the second hinge shaft with respect to the hinge main body with a predetermined force when the first hinge shaft is located in the restriction range is disposed between the hinge main body and the second hinge shaft.
It is also preferable that third turn biasing means adapted to turn bias the first hinge shaft either in the one or the other direction when the first hinge shaft is located in a predetermined intermediate position between the first position and the second position is disposed at one of between the hinge main body and the first hinge shaft and between the hinge main body and the second hinge shaft, and turn prohibiting means adapted to prohibit the first hinge shaft from being turned by a turn biasing force of the third turn biasing means with a predetermined prohibiting force when the first hinge shaft is located in the intermediate position is disposed at the other.
It is also preferable that first turn restricting means adapted to restrict turn of the first hinge shaft with respect to the hinge main body with a predetermined force when the first hinge shaft is located in a predetermined first restriction range between the first position and the intermediate position and when the first hinge shaft is located in a predetermined second restriction range between the intermediate position and the second position is disposed at least at one of between the hinge main body and the first hinge shaft and between the hinge main body and the second hinge shaft, and second turn restricting means adapted to restrict turn of the second hinge shaft with respect to the hinge main body with a predetermined force when the first hinge shaft is located in the first and second restriction ranges is disposed between the hinge main body and the second hinge shaft.

It is also preferable that the first hinge shaft is provided at one end part thereof with a first attachment part, and the second hinge shaft is provided at one end part thereof with a second attachment part. In the foregoing arrangement, it is preferable that the hinge main body is provided at a part thereof located on the same axis as the first hinge shaft with a third attachment part, and the hinge main body is provided at a part thereof located on the same axis as the second hinge shaft with a fourth attachment part.

EFFECT OF THE INVENTION

In case a biaxial hinge device having the above-mentioned structural features is used, for example, in a portable telephone set, the first hinge shaft is non-turnably connected to one of the transmission section and the reception section, and the second hinge shaft is non-turnably connected to the other. Owing to this arrangement, the transmission section and the reception section can turnably be connected to each other through the biaxial hinge device. Presume that the transmission section is positionally fixed and the reception section is turned with respect to the transmission section. It is further presumed that when the first hinge shaft is located in the first position, the reception section is located in a folding position and the reception section is turn biased from a talking position to the folding position by the first turn biasing means through the first hinge shaft. Under that condition, a gear surface of the first gear is press contacted with a gear surface of the second gear non-turnably connected to the transmission section by the first turn biasing means. Accordingly, the first and second gears are not rattled. Thus, rattle can be prevented from occurring between the transmission section and the reception section.

BRIEF DESCRIPTION OF DRAWINGS

FIG. 1 is a perspective view of a portable telephone set using a biaxial hinge device according to the present invention, in which a reception section is turned to the folding position.

FIG. 2 is a perspective view of the above portable telephone set, in which the reception section is turned 90 degrees in the opening direction from the folding position.

FIG. 3 is a perspective view of the above portable telephone set, in which the reception section is turned 180 degrees in the opening direction from the folding position.

FIG. 4 is a perspective view of the above portable telephone set, in which the reception section is turned 360 degrees in the reverse direction from the folding position and reaches a reverse folding position.

FIG. 5 is an exploded perspective view of the above portable telephone set.

FIG. 6 is a perspective view showing an essential structural part of a biaxial hinge device according to the present invention for turnably connecting the transmission section and the reception section of the above portable telephone set to each other.

FIG. 7 is a perspective view of the above essential structural part but when viewed in a different direction from that of FIG. 6.

FIG. 8 is a sectional view of a biaxial hinge device according to the present invention taken on line X-X of FIG. 6.

FIG. 9 is a sectional view taken on line X-X of FIG. 8.

FIG. 10 is an exploded perspective view of the above biaxial hinge device.

FIG. 11 is a view showing a state of the first and second gears and the outer case of the biaxial hinge device when the reception section of the portable telephone set shown in FIGS. 1 through 4 is located in the folding position.

FIG. 12 is a view showing a state of the first and second gears and the outer case of the biaxial hinge device when the reception section of the above portable telephone set is turned 90 degrees from the folding position.

FIG. 13 is a view showing a state of the first and second gears and the outer case of the biaxial hinge device when the reception section of the above portable telephone set is turned 180 degrees from the folding position.

FIG. 14 is a view showing a state of the first and second gears and the outer case of the biaxial hinge device when the reception section of the above portable telephone set is turned 270 degrees from the folding position.

FIG. 15 is a view of the first and second gears and the outer case when the reception section of the above portable telephone set is turned to the reverse folding position.

FIG. 16 is a view showing a relation between the first and second hinge members and first and second gears and two spherical bodies when the reception section of the above portable telephone set is located in the folding position.

FIG. 17 is a view showing a relation between the first and second hinge members and first and second gears and the two spherical bodies when the reception section of the above portable telephone set is turned 90 degrees from the folding position.

FIG. 18 is a view showing a relation of the first and second hinge members and first and second gears and the two spherical bodies when the reception section of the above portable telephone set is turned 180 degrees from the folding position.

FIG. 19 is a view showing a relation between the first and second hinge members and first and second gears and the two spherical bodies when the reception section of the above portable telephone set is turned to the reverse folding position.

FIG. 20 is an enlarged sectional view taken on line X-X of FIG. 16.

FIG. 21 is an enlarged sectional view taken on line X-X of FIG. 17.

FIG. 22(A) of FIG. 22 is an enlarged sectional view taken on line X-X of FIG. 18 and FIG. 22(B) is an enlarged sectional view taken on line Y-Y of FIG. 18.

FIG. 23 is an enlarged sectional view taken on line X-X of FIG. 19.

## DESCRIPTION OF REFERENCE NUMERAL

| 10 | biaxial hinge device |
| 11 | outer case (hinge main body) |
| 11a | fitting cylindrical part (third attachment part) |
| 11b | fitting cylindrical part (fourth attachment part) |
| 21 | inner case (hinge main body) |
| 23A | first hinge member (first hinge shaft) |
| 23B | second hinge member (second hinge shaft) |
| 23b | shaft part (first attachment part, second attachment part) |
| 24A | first gear |
| 24B | second gear |
| 40 | .first turn biasing means |
| 50 | second turn biasing means |
| 60 | third turn biasing means |
| 70 | turn prohibiting means |
| 80 | first turn restricting means |
| 90 | second turn restricting means |

## BEST MODE FOR CARRYING OUT THE INVENTION

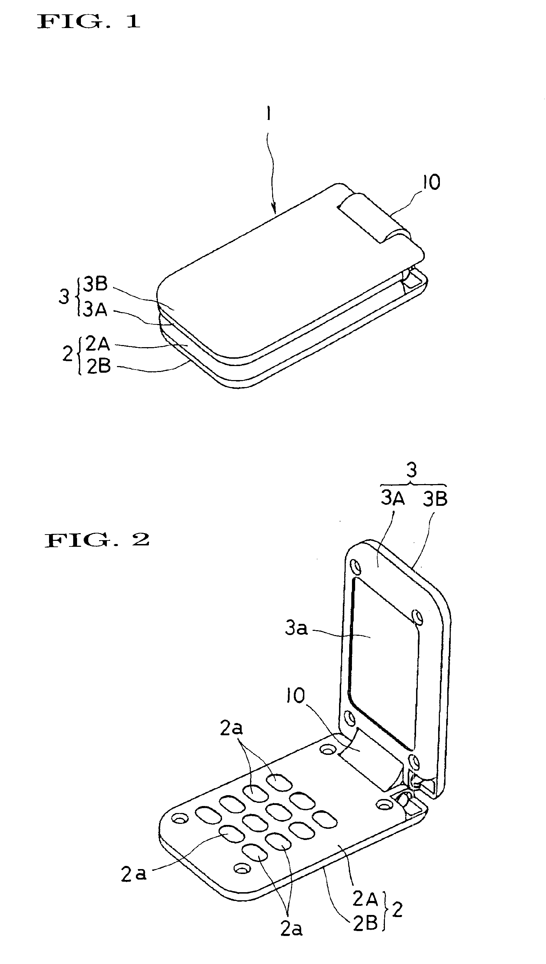

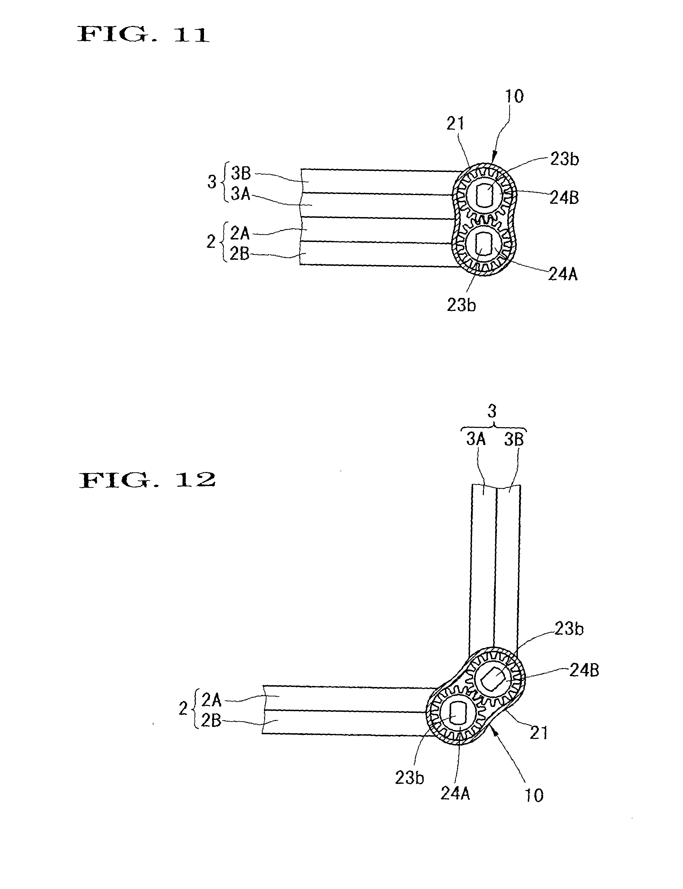

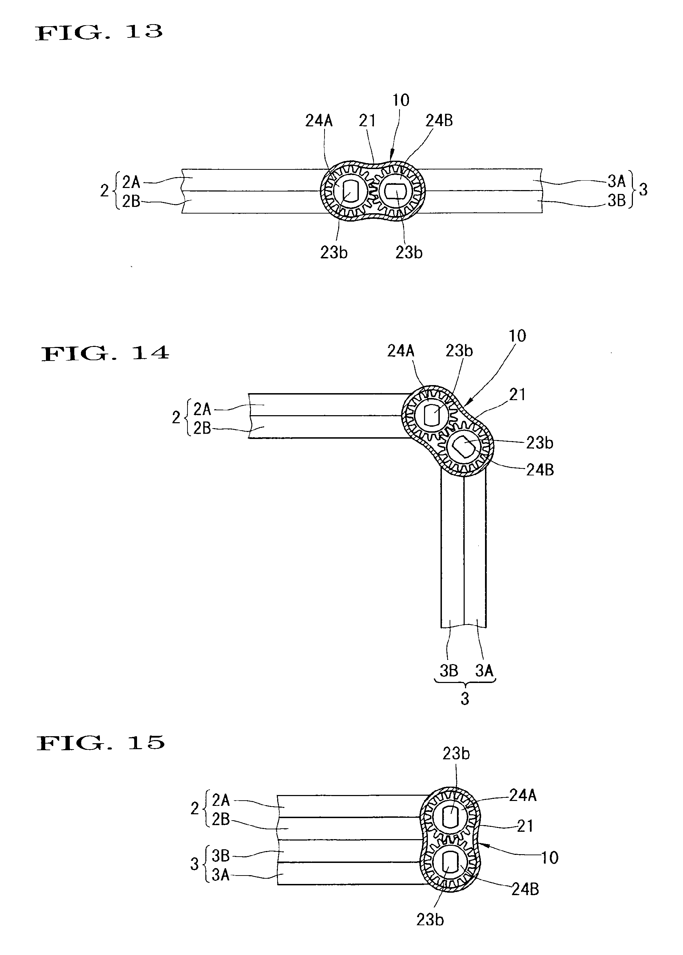

The best mode for carrying out the present invention will be described hereinafter with reference to FIGS. 1 through 23 of the accompanying drawings.

FIGS. 1 through 5 show a portable telephone set 1 in which a biaxial hinge device 10 according to the present invention is used. This portable telephone set 1 includes a transmission section 2 and a reception section 3 turnably connected to each other through the biaxial hinge device 10.

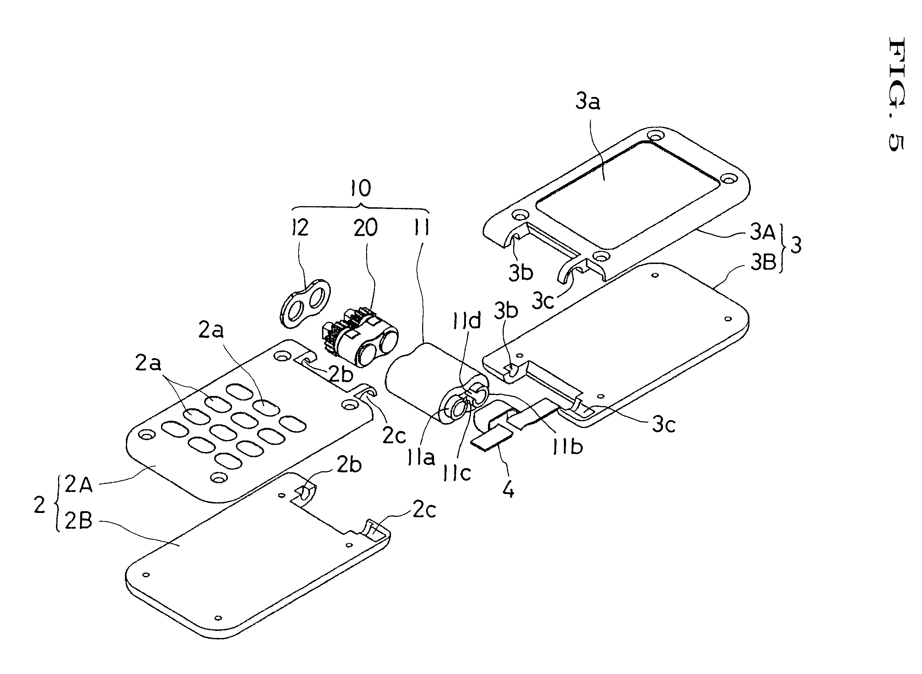

The transmission section 2 includes a front half-body 2A provided at a front surface thereof with a control button 2a, and a rear half body 2B fixed to a rear surface of the front half body 2A. As shown in FIG. 5, a groove part is formed in one side part (left side part in FIG. 5) of one end part (end part on the reception section 3 side) of each of the front half body 2A and the rear half body 2B. Those groove parts are arranged such that they are opposite to each other when the front half body 2A and the rear half body 2B are fixed, and an engagement hole 2b having a non-circular configuration in section (rectangular configuration in section in this embodiment) is constituted by those two groove parts. In FIG. 5, the two grooves constituting the engagement hole 2b are denoted by 2b, 2b, respectively. A semi-circular groove part is formed in the other side part of the above-mentioned one end part of each of the front half body 2A and the rear half body 2B. Those groove parts are arranged to be opposed to each other when the front half body 2A and the rear half body 2B are fixed. A fitting hole 2c having a circular configuration in section is constituted by the two groove parts. The fitting hole 2c and the engagement hole 2b are arranged such that their axes are aligned to each other. In FIG. 5, the two grooves constituting the fitting hole 2c are each denoted by reference numeral 2c. The reception section 3 includes a front half body 3A which is provided at a front surface thereof with a liquid crystal display part 3a and a rear half body 3B which is fixed to a rear surface of the front half body 3A. As shown in FIG. 5, a groove part is formed in one side part (left side part in FIG. 5) of one end part (end part on the transmission section 2 side in FIG. 5) of each of the front half body 3A and the rear half body 3B. Those groove parts are arranged to be opposed to each other when the front half body 3A and the rear half body 3B are fixed. An engagement hole 3b having a non-circular configuration in section is constituted by the two groove parts. This engagement hole 3b has the same sectional configuration as the engagement hole 2b. The engagement hole 3b is formed such that its axis is aligned with that of the engagement hole 2b. In FIG. 5, the two grooves constituting the engagement hole 3b are each denoted by reference numeral 3b. A semi-circular groove part is formed in the other side part of one end part of each of the front half body 3A and the rear half body 3B. Those groove parts are arranged to be opposed to each other when the front half body 3A and the rear half body 3B are fixed. A fitting hole 3c having a circular configuration in section is constituted by the two groove parts. This fitting hole 3c is arranged such that its axis is aligned with that of the engagement hole 3b. In FIG. 5, the two grooves constituting the fitting hole 3c are each denoted by reference numeral 3c.

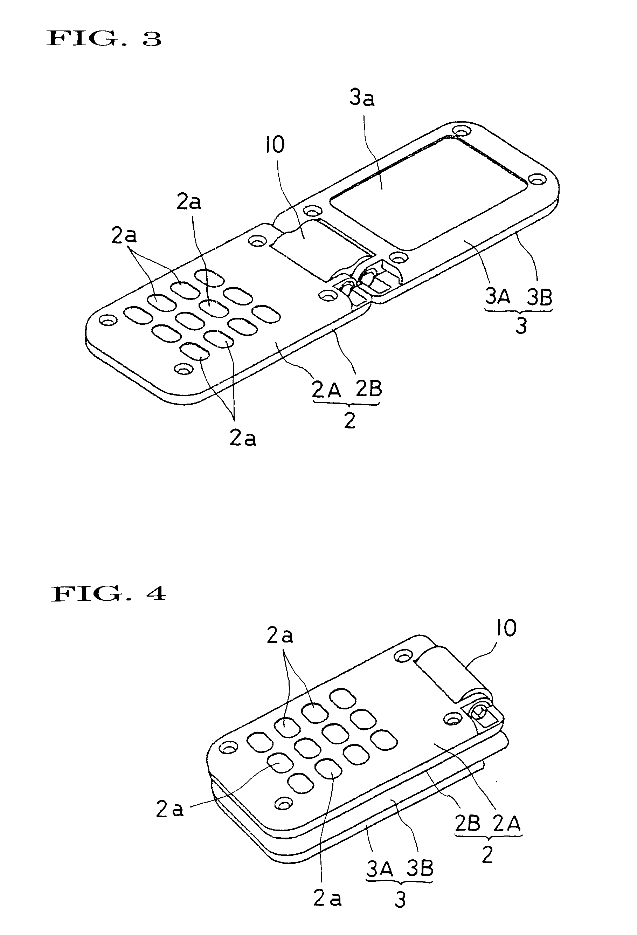

One end portions of the transmission section 2 and reception section 3 are turnably connected to each other through the biaxial hinge device 10. The transmission section 2 and the reception section 3 can turn in a range of about 360 degrees between a folding position (first position) shown in FIG. 1 where their front surfaces are abutted with each other and a reverse folding position (second position) where their rear surfaces are abutted with each other. By a predetermined large force of the hinge device 10, the transmission section 2 and the reception section 3 can be kept respectively in the folding position, an intermediate position shown in FIG. 3 turned 180 degrees from the folding position and the reverse folding position, and stopped in any desired position respectively in a predetermined first restricting range between the folding position and the intermediate position and a predetermined second restricting range between the intermediate position and the reverse folding position by a predetermined large force. It should be noted that although the transmission section 2 and the reception section 3 are relatively turnable, it is presumed, just for the sake of convenience for explanation, in the description to follow that the transmission section 2 is positionally fixed and the reception section 3 is turned with respect to the transmission section 2 between the folding position and the reverse folding position.

The biaxial hinge device 10 for turnably connecting the transmission section 2 and the reception section 3 together includes, as shown in FIG. 5, an outer case 11 having a bottomed cylindrical configuration, a closure member fixedly fitted to an opening part of the outer case 11 and a hinge assembly 20.

The outer case 11 has a figure-8 configuration in section and is turnably arranged between adjacent one end parts, in FIG. 5, of the transmission section 2 and reception section 3 such that its longitudinal direction is aligned with the axes of the engagement holes 2b, 3b and fitting holes 2c, 3c, its opening part is directed to the engagement holes 2b, 3b and its bottom part is directed to the fitting holes 2c, 3c. A pair of fitting cylindrical parts 11a, 11b parallel to the longitudinal direction of the outer case 11 are formed on an outer surface of the bottom part of the outer case 11. The fitting cylindrical part (third attachment part) 11a is turnably fitted to an end part on the engagement hole 2b side of the fitting hole 2c and the other fitting cylindrical part (fourth attachment part) 11b is turnably fitted to an end part on the engagement hole 3b side of the fitting hole 3c. Owing to this arrangement, one and the other side parts on the bottom part side of the outer case 11 are turnably connected to the transmission section 2 and the reception section 3, respectively. In other words, the other side parts (right side parts in FIG. 5) of one end parts of the transmission section 2 and reception section 3 are turnably connected to each other through the outer case 11. It is, of course, accepted that the fitting cylindrical part 11a is fitted to the fitting hole 3c and the fitting cylindrical part 11b is fitted to the engagement hole 2c.

Cutout parts 11c, 11d are formed in the fitting cylindrical parts 11a, 11b, respectively. A flat cable 4 is inserted in the fitting cylindrical parts 11a, 11b through the cutout parts 11c, 11d. The flat cable 4 is spirally coiled within the respective fitting cylindrical parts 11a, 11b. One end part of the flat cable 4 externally projecting from the fitting cylindrical part 11a is connected to an electronic equipment (not shown) disposed within the transmission section 2, and the other end part externally projecting from the fitting cylindrical part 11b is connected to an electronic equipment (not shown) disposed within the reception section 3. Owing to this arrangement, the electronic equipment disposed within the transmission section 2 and the electronic equipment disposed within the reception section 3 are electrically connected to each other through the flat cable 4. In case the flat cable 4 is not inserted in the fitting cylindrical parts 11a, 11b, the cutout parts 11c, 11d are unnecessary and the fitting cylindrical parts 11a, 11b may be each formed as a solid shaft part. In FIGS. 2 and 4, the flat cable 4 is not shown.

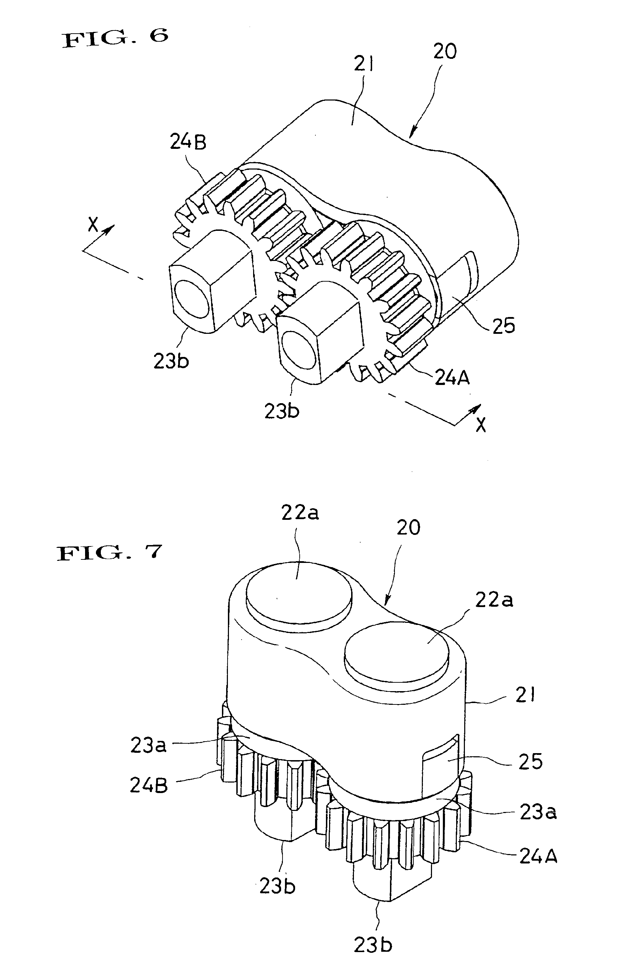

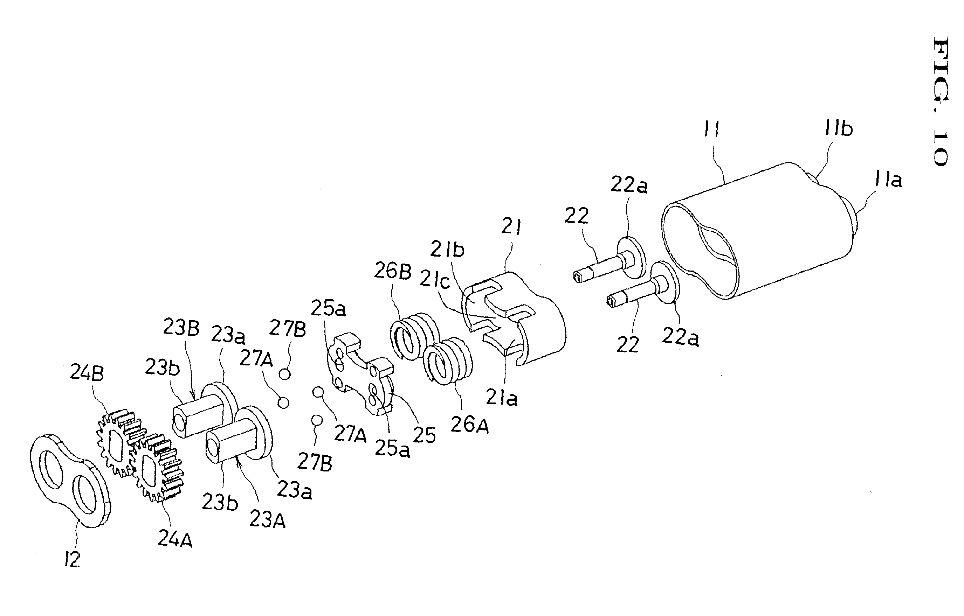

The hinge assembly 20 includes, as shown in FIGS. 6 through 10, an inner case 21. The inner case 21 has a bottomed cylindrical configuration and has a similar sectional configuration to that of the outer case 11. The inner case 21 is almost tightly inserted in the outer case 11 through the opening part. Accordingly, the inner case 21 is non-turnably fitted to the outer case 11 and turned integrally with the outer case 11. Thus, the inner case 21 and the outer case 11 may be integrally formed. As apparent from the foregoing, in this embodiment, a hinge main body is constituted by the outer case 11 and the inner case 21. The bottom part of the inner case 21 is in abutment with an inner surface of the bottom part of the outer case 11. Accordingly, the inner case 21 is non-movable in a direction from the opening part to the bottom part of the outer case 11. As shown in FIG. 10, the inner case 21 includes two receiving holes 21a, 21b extending from one end face thereof toward the other end (bottom part). Those two receiving holes 21a, 21b extend in parallel to each other. Moreover, those two receiving holes 21a, 21b are arranged such that their axes are aligned with the axes of the fitting cylindrical parts 11a, 11b of the outer case 11, respectively. Adjacent side parts of those two receiving holes 21a, 21b are communicated with each other through a communicating part 21c. The inside diameter of the receiving holes 21a, 21b is set to be slightly smaller than a half of their center-to-center distance. Accordingly, by forming a partition wall for partitioning the receiving holes 21a, 21b instead of a provision of the communicating part 21c, the receiving holes 21a, 21b may be formed as independent holes.

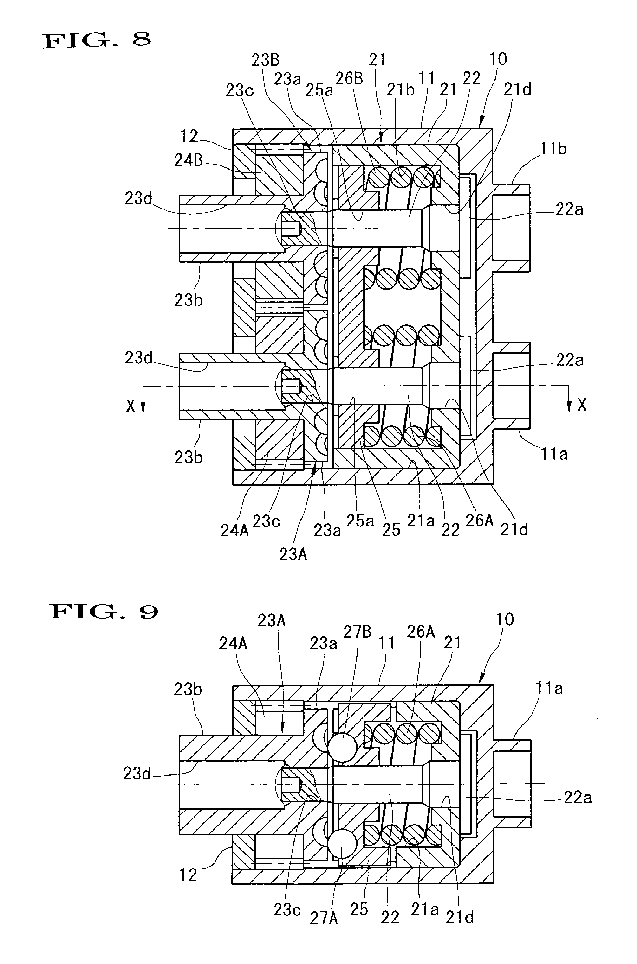

As shown in FIGS. 8 and 9, two through-holes 21d are formed in the bottom part of the inner case 21. One of the through-holes 21d is formed such that its axis is aligned with that of the receiving hole 21a. The other through-hole 21d is formed such that its axis is aligned with that of the receiving hole 21b. A connecting shaft 22 is turnably inserted in the through-holes 21d. A head part 22a having a larger diameter than the through holes 21d is formed on one end part of the connecting shaft 22. This head part 22a is brought into abutment with an outer surface of the bottom part of the inner case 21, thereby prohibiting movement of the connecting shaft 22 from the bottom part to the opening part of the inner case 21. A place slightly offset toward the other end part from a central part of the connecting shaft 22 is turnably fitted to a through-hole 25a of a movable member 25 as later described. One end part and an intermediate part of the connecting shaft 22 are turnably fitted to the through-holes 21d, 25a respectively, thereby turnably supporting the connecting shafts 22, 22 on the inner case 21 and thus, turnably supporting the connecting shafts 22, 22 on the outer case 11. Of course, the axis of one of the connecting shafts 22 is aligned with that of the connecting hole 21a and the axis of the other connecting shaft 22 is aligned with that of the connecting hole 21b.

The other end parts of the respective connecting holes 22 are externally projected through the opening part of the inner case 21. A first hinge member (first hinge shaft) 23A is fixedly fitted to the other end part projecting from the inner case 21 of one of the connecting shafts 22. A second hinge member (second hinge shaft) 23B is fixedly fitted to the other end part projecting from the inner case 21 of the other connecting shaft 22. The first and second hinge members 23A, 23B are identically or symmetrically constituted excepting parts thereof. Hence, in the description to follow, only the first hinge member 23A will be described. With respect to the second hinge member 23B, only different components from those of the first hinge member 23A will be described, and identical or symmetrical components to those of the first hinge member 23A will be labeled in the same manner and description thereof will be omitted.

The first hinge member 23A includes a disc part 23a and a shaft part (first attachment part) 23b which are integrally formed with their axes aligned to each other. The first hinge member 23A is arranged such that an end face on the opposite side to the shaft part 23b of the disc part 23a is opposed to an end face on the opening side of the inner case 21 and its axis (axes of the disc part 23a and shaft part 23b) is aligned with the axis of the receiving hole 21a. A lock hole 23c extending from an end face of the disc part 23a opposed to the inner case 21 toward the shaft part 23b and a hole 23d extending from a tip surface of the shaft part 23b toward the disc part 23a are formed on a central part of the first hinge member 23A. The inside diameter of the hole 23d is larger than that of the lock hole 23c. The other end of one of the connecting shafts 22 is non-turnably fitted to the lock hole 23c. The other end of the connecting shaft 22 is projected from the lock hole 23c toward the hole 23d and the projected end part is caulked as indicated by an imaginary line in FIGS. 8 and 9, thereby prohibiting the first hinge member 23A from escaping from the right side toward the left side of FIG. 8 with respect to the connecting shaft 22. As a result, the first hinge member 23A and the connecting shaft 22 are prohibited from moving leftward of FIG. 8 by the head part 22a and prohibited from moving rightward of FIG. 8 by a caulking part with respect to the inner case 21. Owing to this arrangement, the inner case 21, the connecting shaft 22 and the first hinge member 23A are integrated. Since a slight gap is present between the disc part 23a and the inner case 21, the first hinge member 23A and the connecting shaft 22 are movable in the axial direction by a portion equal to the gap. Actually, however, the first hinge member 23A and the connecting shaft 22 are never moved in the axial direction.

The second hinge member 23B also includes a disc part 23a and a shaft part (second attachment part) 23b. The second hinge member 23B is arranged such that its axis is aligned with that of the receiving hole 21b and connected to the other end part of the other connecting shaft 22 in the same manner as the first hinge member 23A.

A first gear 24A is non-turnably externally fitted to the shaft part 23b of the first hinge member 23A and a second gear 24B is non-turnably externally fitted to the shaft part 23b of the second hinge member 23B. The first and second gears 24A, 24B have same gear dimensions and are meshed with each other. Accordingly, the first and second hinge members 23A, 23B are rotated at the same speed in the reverse direction.

The inner case 21, the first and second hinge members 23A, 23B and the first and second gears 24A, 24B are inserted in the outer case 11 excepting the tip parts of the shaft parts 23b, 23b of the first and second hinge members 23A, 23B. Moreover, the first and second hinge members 23A, 23B and the first and second gears 24A, 24B are turnably received in the outer case 11. A closure member 12 is fixedly fitted to an end part on the opening side of the outer case 11. This closure member 12 is in contact with the end faces of the first and second gears 24A, 24B. Accordingly, the hinge assembly 20 is prohibited from moving in an axial direction of the outer case 11 by the bottom part of the outer case 11 and the closure member 12 and prevented from escaping with respect to the outer case 11.

Mutually parallel two planes are formed on both side parts of an outer peripheral surface of the shaft part 23b of the first hinge member 23A. Owing to this arrangement, the sectional configuration of the shaft part 23b is same as that of the engagement hole 2b. The tip part of the shaft part 23b is turnably passed through the closure member 12, and the tip part of the shaft part 23b externally projecting from the closure member 12 is non-turnably fitted to the engagement hole 2b of the transmission section 2. On the other hand, the shaft part 23b of the second hinge member 23B is non-turnably fitted to the engagement hole 3b of the reception section 3.

Although the shaft parts 23b, 23b of the first and second hinge members 23A, 23B are non-turnably fitted to the engagement holes 2b, 3b respectively, the first and second hinge members 23A, 23B are turnable with respect to the inner case 21 and the outer case 11. Moreover, the fitting cylindrical parts 11a, 11b of the outer case 11 are turnably fitted to the fitting holes 2c, 3c of the transmission section 2 and the reception section 3 respectively. Accordingly, the transmission section 2 and the reception section 3 are turnably connected to each other through the hinge device 10.

When the transmission section 2 is positionally fixed and the reception section 3 is turned with respect to the transmission section 2, the outer case 11 (and the inner case 21) is turned about the first hinge member 23A in accordance with the turning movement of the reception section 3. When the outer case 11 is turned by an angle θ, the second hinge member 23B and the second gear 24B are revolved by the angle θ about the first hinge member 23A integrally with the outer case 11. Since the second gear 24B is meshed with the first gear 24A at that time, when the second gear 24B is revolved, the second gear 24B is turned by the same angle as the revolving angle around its own axis. As a result, the reception section 3 is turned by angle 2θ with respect to the transmission section 2. Moreover, since the first and second gears 24A, 24B are meshed with each other, the reception section 3 is not turned only about the first hinge member 23A nor only about the second hinge member 23B. Instead, the reception section 3 is turned about the first hinge member 23A and also about the second hinge member 23B simultaneously. Accordingly, the reception section 3 is always turned along a constant locus.

As mentioned above, the reception section 3 is turnable by 360 degrees from the folding position to the reverse folding position via the intermediate position. Moreover, in this hinge device, there is provided a first turn biasing means 40 in order to keep the reception section 3 in the folding position with a predetermined force, there is also provided a second turn biasing means 50 in order to keep the reception section 3 in the reverse folding position, there is also provided a turn prohibiting means 70 in order to keep the reception section 3 in the intermediate position with a predetermined force, and there is also provided a third turn biasing means 60 in order to prevent the occurrence of rattle between the transmission section 2 and the reception section 3 in the intermediate position. That is, as shown in FIGS. 8 and 9, a movable member 25 is received in an end part on the opening side of the inside part of the inner case 21. The movable member 25 has the same outer configuration as the inner sectional configuration of the inner case 21 and is non-turnably fitted to the interior of the inner case 21. Accordingly, the movable member 25 is turned integrally with the inner case 21 and the outer case 11. The movable member 25 is received in the inner case 21 such that the movable member 25 is movable with respect to the axial direction of the receiving holes 21a, 21b. Moreover, the movable member 25 is penetrated by the connecting shafts 22, 22 such that the movable member 25 is movable in the axial direction thereof (axial direction of the receiving holes 21a, 21b). A first coiled spring (first biasing means) 26A is disposed in an annular space between the inner peripheral surface of the receiving hole 21a and the outer peripheral surface of one of the connecting shafts 22 arranged in the receiving hole 21a, and a second coiled spring (second biasing means) 26B is disposed in an annular space between the inner peripheral surface of the receiving hole 21b and the outer peripheral surface of the other connecting shaft 22 arranged in the receiving hole 21b. One end parts of the first and second coiled springs 26A, 26B are abutted with the bottom part of the inner case 21 and the other end parts are abutted with the movable member 25. As a result, the movable member 25 is biased toward the disc parts 23a, 23a of the first and second hinge members 23A, 23B by the first and second coiled springs 26A, 26B. In case the receiving holes 21a, 21b are formed independently from each other, the movable member 25 is separated into two parts and the separated two parts are fitted to the independent two receiving holes such that the two parts are non-turnable but movable in the axial direction.

As shown in FIG. 9, a pair of spherical bodies 27A, 27B are fixedly embedded in an end face of the movable member 25 opposed to the disc part 23a of the first hinge member 23A with about 1/3 of the pair of spherical bodies 27A, 27B externally projected. The pair of spherical bodies 27A, 27B are arranged 180 degrees away from each other in the peripheral direction about the axis of the first hinge member 23A. Moreover, the spherical body 27A is arranged on the outer periphery side of the disc part 23a and the other spherical body 27B is arranged more on the inner periphery side of the disc part 23a than the spherical body 27A.

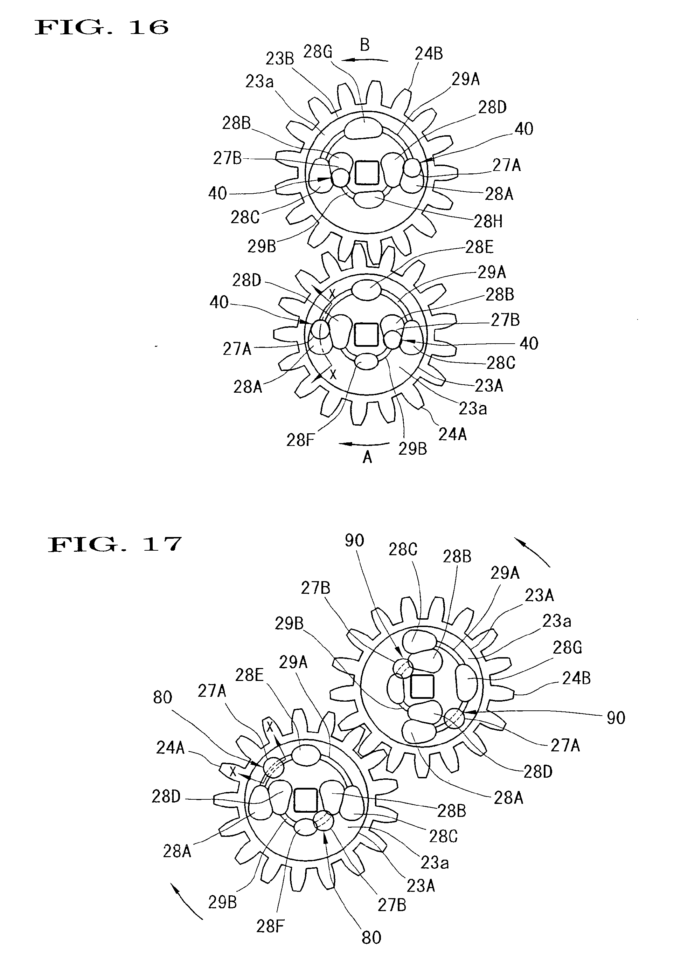

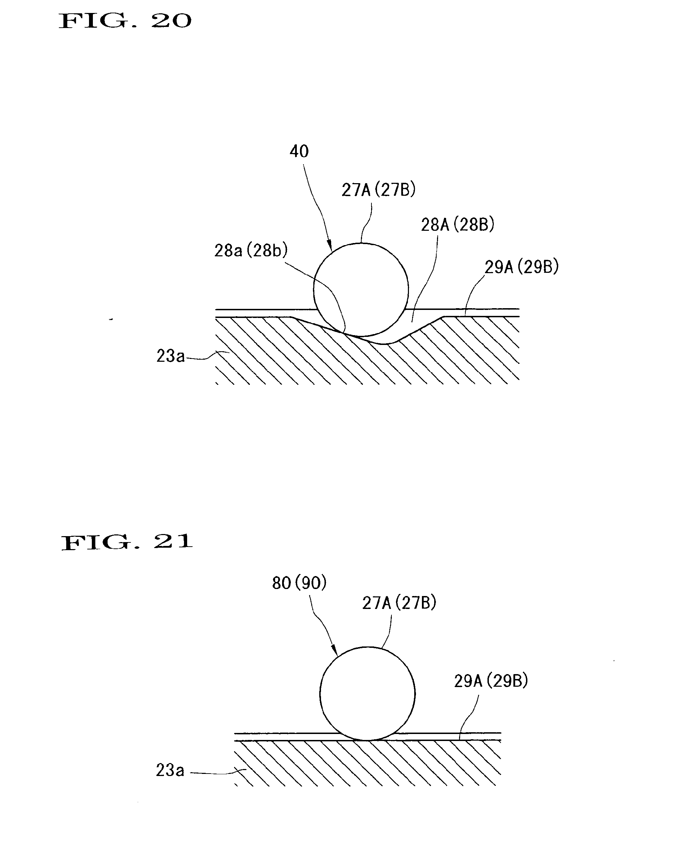

As shown in FIGS. 16 through 19, a pair of first recesses 28A, 28B are formed in an end faces of the disc part 23a of the first hinge member 23A opposed to the movable member 25. As shown in FIG. 20, the pair of recesses 28A, 28B are arranged such that when the reception section is located in the folding position, the spherical bodies 27A, 27B are press contacted with inclination surfaces 28a, 28b, respectively, which form a part of the bottom surfaces on the recesses 28A, 28B. When the spherical bodies 27A, 27B are press contacted with the inclination surfaces 28a, 28b respectively, biasing force of the first and second coiled springs 26A, 26B are converted to turn biasing force. By this turn biasing force, the first hinge member 23A and the first gear 24A are turn biased in an arrowed direction (one direction) A of FIG. 16. However, since it is presumed that the transmission section 2 is positionally fixed, the first hinge member 23A and the first gear 24A are not turned in the arrowed direction A. A pair of spherical bodies 27A, 27B are also fixedly embedded in the end face of the movable member 25 opposed to the disc part 23a of the second hinge member 23B and a pair of first recesses 28A, 28B are also formed in an end face of the disc part 23a of the second hinge member 23B opposed to the movable member 25. When the reception section 3 is located in the folding position, the pair of spherical bodies 27A, 27B are pressed against the inclination surfaces 28a, 28b of the pair of recesses 28A, 28B by biasing force of the coiled springs 26A, 26B. When the pair of spherical bodies 27A, 27B are pressed against the inclination surfaces 28a, 28b of the pair of recesses 28A, 28B respectively, the biasing force of the coiled springs 26A, 26B is converted to turn biasing force. By this turn biasing force, the second hinge member 23B and the second gear 24B are turn biased in an arrowed direction (one direction) B of FIG. 16. As a result, the reception section 3 is turn biased in a direction from the intermediate position toward the folding position. Accordingly, the reception section 3 is kept in the folding position where the front surface of the reception section 3 is abutted with that of the transmission section 2.

As apparent from the foregoing description, in this hinge device, the first turn biasing means 40 is constituted by each set of the coiled springs 26A, 26B, the spherical body 27A and the inclination surface 28a of the recess 28A of the first hinge member 23A; the coiled springs 26A, 26B, the spherical body 27B and the inclination surface 28b of the recess 28B of the first hinge member 23A; the coiled springs 26A, 26B, the spherical body 27A and the inclination surface 28a of the recess 28A of the second hinge member 23B; and the coiled springs 26A, 26B, the spherical body 27B and the inclination surface 28b of the recess 28B of the second hinge member 23B. Of course, it is not necessary to use all of the above-mentioned four sets as the first turn biasing means 40. Only any desired one through three sets may be used as the first turn biasing means 40.

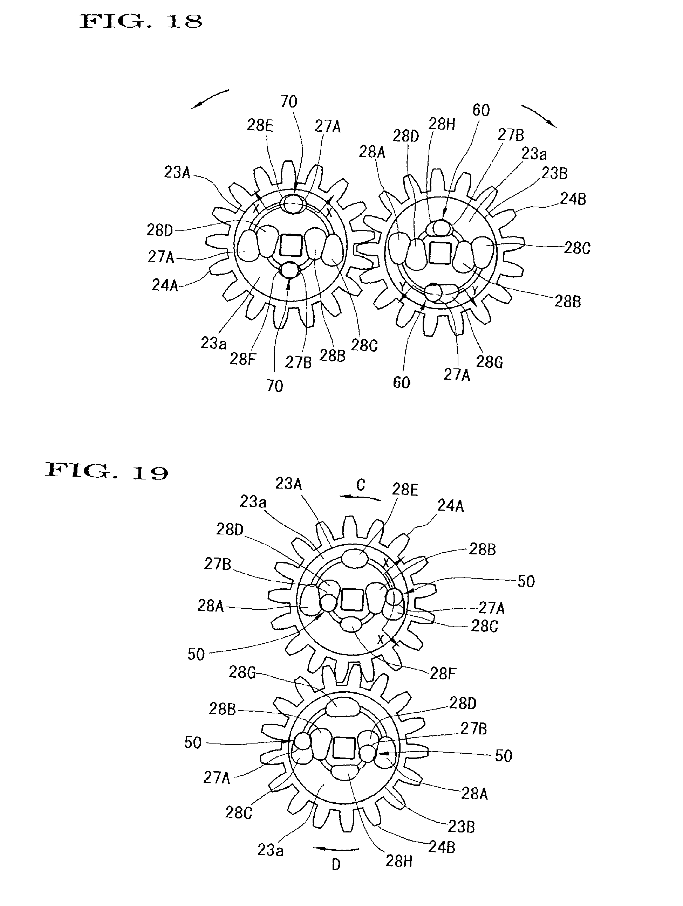

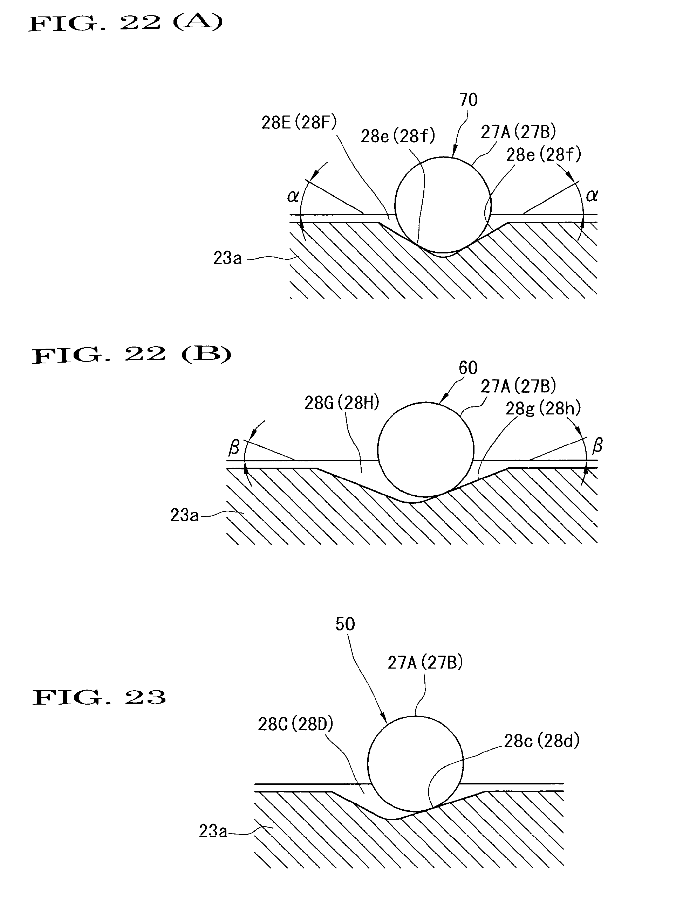

A pair of second recesses 28C, 28D are formed in the end face of the disc part 23a of the first hinge member 23A opposed to the movable member 25. The pair of second recesses 28C, 28D are 180 degrees away from each other in the peripheral direction. The second recess 28C is arranged on the same circumference as the first recess 28A in such a manner as to be away by a predetermined angle (200 degrees in this embodiment) from the first recess 28A in the peripheral direction. The other second recess 28D is arranged on the same circumference as the first recess 28B in such a manner as to be away by the same angle as the separation angle between the first recess 28A and the second recess 28C from the first recess 28B in the peripheral direction. The separation angles between the first recesses 28A, 28B and the second recesses 28C, 28D are set such that when the reception section 3 is located in the reverse folding position as shown in FIGS. 19 and 23, the pair of spherical bodies 27A, 27B are press contacted with the inclination surfaces 28c, 28d, respectively, which form a part of the bottom surfaces of the pair of recesses 28C, 28D. When the spherical bodies 27A, 27B are press contacted against the inclination surfaces 28c, 28d respectively, the turn biasing force of the first and second coiled springs 26A, 26B is converted to turn biasing force. By this turn biasing force, the first hinge member 23A and the first gear 24A are turn biased in the arrowed direction (the other direction) C of FIG. 19. As mentioned above, however, since it is presumed that the transmission section 2 is positionally fixed, the first hinge member 23A and the first gear 24A are not turned in the arrowed direction C.

Likewise, a pair of second recesses 28C, 28D are formed in the end face of the disc part 23a of the second hinge member 23B opposed to the movable member 25. When the reception section 3 is located in the folding position, the pair of spherical bodies 27A, 27B are pressed against the inclination surfaces 28c, 28d of the pair of recesses 28C, 28D, respectively, by biasing force of the coiled springs 26A, 26B. The biasing force of the coiled springs 26A, 26B is converted to turn biasing force for turn biasing the second hinge member 23B and the second gear 24B in an arrowed direction (the other direction) D of FIG. 19 by the pair of spherical bodies 27A, 27B and the inclination surfaces 28c, 28d. By this turn biasing force, the reception section 3 is kept in the reverse folding position.

As apparent from the foregoing description, in this hinge device, the second turn biasing means 50 is constituted by each set of the coiled springs 26A, 26B, the spherical body 27A and the inclination surface 28c of the recess 28C of the first hinge member 23A; the coiled springs 26A, 26B, the spherical body 27B and the inclination surface 28d of the recess 28D of the first hinge member 23A; the coiled springs 26A, 26B, the spherical body 27A and the inclination surface 28c of the recess 28C of the second hinge member 23B; and the coiled springs 26A, 26B, the spherical body 27B and the inclination surface 28d of the recess 28D of the second hinge member 23B. Of course, it is not necessary to use all of the above-mentioned four sets as the second turn biasing means 50. Only any desired one through three sets may be used as the second turn biasing means 50.

There is provided a turn prohibiting means 70 in order to keep the reception section 3 in the intermediate position 180 degrees spaced away from the folding position toward the reverse folding position by a predetermined force. That is, a pair of third recesses 28E, 28F are formed in the end face of the disc part 23a of the first hinge member 23A opposed to the movable member 25. The recess 28E is arranged in a central part between the recesses 28A, 28C on the same circumference as the recesses 28A, 28C and the other recess 28F is arranged in a central part between the recesses 28B, 28D on the same circumference as the recesses 28B, 28D. Accordingly, when the reception section 3 is turned to the intermediate position, as shown in FIGS. 18 and 22(A), the spherical body 27A is simultaneously brought into contact with mutually reversely inclined two inclination surfaces 28e, 28e which constitute a bottom surface of the recess 28E, and the spherical body 27B is simultaneously brought into contact with mutually reversely inclined two inclination surfaces 28f, 28f which constitute a bottom surface of the recess 28F. By this, the first hinge member 23A and the first gear 24A are prohibited from turning normally and reversely by a predetermined force. Accordingly, in this hinge device 10, the turn prohibiting means 70 is constituted by each set of the coiled springs 26A, 26B, the spherical body 27A and the inclination surfaces 28e, 28e of the recess 28E; and the coiled springs 26A, 26B, the spherical body 27B and the inclination surfaces 28f, 28f of the recess 28F. Of course, only desired one of the two sets may be used as the turn prohibiting means 70. A pair of fourth recesses 28G, 28H are formed in the end face of the disc part 23a of the second hinge member 23B opposed to the movable member 25. The recess 28G is arranged on the same circumference as the recesses 28A, 28C. With respect to the position in the circumferential direction, however, the recess 28G is located in a position slightly offset toward either the recess 28A or the recess 28C (toward the recess 28C in this embodiment) from a central part therebetween. The other recess 28H is arranged on the same circumference as the recesses 28B, 28D. With respect to the position in the peripheral direction, the recess 28H is located in a position slightly offset toward either the recess 28B or the recess 28D (toward the recess 28D in this embodiment) from a central part therebetween. As a result, when the reception section 3 reaches the intermediate position, as shown in FIG. 22(B), the spherical bodies 27A, 27B are press contacted with the inclination surfaces 28g, 28h which constitute a part of the bottom surfaces of the recesses 28G, 28H, respectively. By this, the biasing force of the coiled springs 26A, 26B are converted to turn biasing force. By this turn biasing force, the second hinge member 23B and the second gear 24B are turn biased in an arrowed direction (clockwise direction) of FIG. 18, and the first gear 24A and the first hinge member 23A are turn biased in a counterclockwise direction through the second gear 24B. Accordingly, in this hinge device 10, the third turn biasing means 60 is constituted by each set of the coiled springs 26A, 26B, the spherical body 27A and the inclination surface 28g of the recess 28G; and the coiled springs 26A, 26B, the spherical body 27B and the inclination surface 28h of the recess 28H. Of course, only one of the two sets may constitute the third turn biasing means 60.

If the inclination angles of the inclination surfaces 28e, 28f of the recesses 28E, 28F are represented by $\alpha$ and the inclination angles of the inclination surfaces 28g, 28h of the recesses 28G, 28H are represented by $\beta$, the following expression can be obtained.

$$\alpha > \beta$$

Accordingly, the turn prohibiting force of the turn prohibiting means 70 with respect to the first hinge member 23A (first gear 24A) is larger than the turn biasing force of the third turn biasing means 60 transmitted to the first hinge member 23A through the second hinge member 23B, the second gear 24B and the first gear 24A. Thus, the first and second hinge members 23A, 23B are not turned, and the reception section 3 is kept in the intermediate position. Moreover, since the second gear 24B which is turned biased is meshed with the first gear 24A which is prohibited from turning, the respective flanks of the first and second gears 24A, 24B are kept in a mutually press contacted state even if a backlash is present between the gears 24A, 24B. Accordingly, rattling caused by backlash does not occur between the transmission section 2 and the reception section 3 in the intermediate position.

Guide grooves 29A, 29B are formed in the end face of the disc part 23a of the first hinge member 23A opposed to the movable member 25. The guide groove 29A extends from the recess 28A to the recess 28C via the recess 28E on the circumference where the recesses 28A, 28C, 28E are arranged. Accordingly, when the reception section 3 is turned, the spherical body 27A is moved between the recesses 28A, 28E (first restricting range) and between the recesses 28E, 28C (second restricting range) while sliding within the guide groove 29A. The other guide groove 29B extends from the recess 28B to the recess 28D via the recess 28F on the circumference where the recesses 28B, 28D, 28F are arranged. Accordingly, when the reception section 3 is turned, the spherical body 27B is moved between the recesses 28B, 28F (first restricting range) and between the recesses 28F, 28D while sliding within the guide groove 29B. Likewise, a pair of guide grooves 29A, 29B are formed in the end face of the disc part 23a of the second hinge member 23B opposed to the movable member 25.

In the hinge device thus constructed, it is presume that the reception section 3 is located in the folding position. When the reception section 3 is in the folding position, the reception section 3 is turn biased in a direction toward the folding position from the intermediate position by the first turn biasing means 40 and the front surface of the reception section 3 is abutted with the front surface of the transmission section 2. Moreover, the reception section 3 is turn biased through the second gear part 24B which is meshed with the first gear 24A which is fixed to the transmission section 2, and the flanks of the gears 24A, 24B are press contacted with each other by turn biasing force of the first turn biasing means 40. Accordingly, the reception section 3 is not rattled even if a backlash is present between the gears 24A, 24B. This is also true when the reception section 3 is located in the intermediate position and in the reverse folding position.

When the reception section 3 is turned by a predetermined angle (10 degrees in this embodiment) toward the intermediate position against the turn biasing force of the first turn biasing means 40, the spherical bodies 27A, 27B are brought out of the recesses 28A, 28B respectively. Thereafter, the spherical bodies 27A, 27B are slid on the bottom surfaces of the guide grooves 29A, 29B respectively. When the reception section 3 is turned to a position located this way by a predetermined angle (10 degrees in this embodiment) with respect to the intermediate position, the spherical bodies 27A, 27B are brought into the recesses 28E, 28F respectively. Then, the first hinge member 23A is biased in the arrowed direction A of FIG. 16 by the inclination surfaces 28e, 28f of the recesses 28E, 28F. By this, the reception section 3 is biased toward the intermediate position. When the reception section 3 reaches the intermediate position, the spherical body 27A is abutted with the two inclination surfaces 28e, 28e simultaneously and the spherical body 27B is abutted with the two inclination surfaces 28f, 28f simultaneously. As a result, the reception section 3 is stopped in the intermediate position by a predetermined force. That is, the reception section 3 is stopped in the intermediate position by the turn prohibiting means 70. When the reception section 3 is turned toward the intermediate position by a portion equal to a deviation of the phase of the recesses 28G, 28H in a peripheral direction with respect to the recesses 28E, 28F, the spherical bodies 27A, 27B are brought into the recesses 28E, 28F respectively. When the reception section 3 reaches the stop position, the spherical bodies 27A, 27B are press contacted with the inclination surfaces 28g, 28h of the recesses 28G, 28H respectively. As a result, the third turn biasing means 60 turn biases the second hinge member 3 in the arrowed direction B of FIG. 16 and urges the flank of the second gear 24B against that of the first gear 24A. Hence, in the intermediate position, the reception section 3 is not rattled by backlash.

When the reception section 3 is turned from the intermediate position toward the reverse folding position by a predetermined angle (10 degrees in this embodiment), the spherical bodies 27A, 27B are brought out of the recesses 28E, 28F respectively. Then, the spherical bodies 27A, 27B are slid on the bottom surfaces of the guide grooves 29A, 29B respectively in accordance with the turning movement of the reception section 3. Thereafter, when the reception section 3 is further turned by a portion equal to a deviation of the phase of the recesses 28G, 28H with respect to the recesses 28E, 28F, the spherical bodies 27A, 27B are brought out of the recesses 28G, 28H respectively. After being brought out of the recesses 28G, 28H, the spherical bodies 27A, 27B are slid on the bottom surfaces of the guide grooves 29A, 29B respectively in accordance with the turning movement toward the reverse folding position of the reception section 3. When the reception section 3 reaches a position this way by a predetermined angle (10 degrees in this embodiment) of the reverse folding position, the spherical bodies 27A, 27B are brought into the recesses 28C, 28D respectively and urged against the inclination surfaces 28c, 28d respectively. As a result, the reception section 3 is turned to the reverse folding position. That is, the reception section 3 is turned to the reverse folding position by the second turn biasing means 50. When the reception section 3 is turned to the reverse folding position, its rear surface is abutted with that of the transmission section 2 and stopped, and the reception section 3 is kept in the reverse folding position by the second turn biasing means 50.

In case the reception section 3 is turned from the reverse folding position to the folding position, the reception 3 may be turned in a procedure reverse to the above-mentioned procedure and description thereof is omitted.

When the spherical bodies 27A, 27B are in contact with the bottom surfaces of the guide grooves 29A, 29B respectively, the spherical bodies 27A, 27B are urged against the bottom surfaces of the guide grooves 29A, 29B by the biasing force of the coiled springs 26A, 26B respectively. Accordingly, friction resistance for prohibiting the turn of the reception section 3 occurs between the outer surfaces of the spherical bodies 27A, 27B and the bottom surfaces of the guide grooves 29A, 29B. This friction resistance is set to a value just enough to prohibit the turn of the reception section 3. Accordingly, when the reception section 3 is located in the predetermined first restricting range (angle range of 160 degrees in this embodiment) between the folding position and the intermediate position and in the predetermined second restricting range (angle range of 160 degrees in this embodiment) between the intermediate position and the reverse folding position, the reception section 3 can be stopped in an optional position. As apparent from the foregoing, the first turn restricting means 80 is constituted by each set of the coiled springs 26A, 26B, the spherical body 27A and the guide groove 29A of the first hinge member 23A; and the coiled springs 26A, 26B, the spherical body 27B and the guide groove 29B of the first hinge member 23A, and the second turn restricting means 90 is constituted by each set of the coiled springs 26A, 26B, the spherical body 27A and the guide groove 29A of the second hinge member 23B; and the coiled springs 26A, 26B, the spherical body 27B and the guide groove 29B of the second hinge member 23B. Of course, it is not necessary to use the above-mentioned two sets as the turn restricting means 80, 90 simultaneously. Any optional one of the two sets may be used as the first and second turn restricting means 80, 90.

In the biaxial hinge device 10 thus constructed, the reception section 3 can be kept in the folding position, the intermediate position and the reverse folding position and the flanks of the first and second gears 24A, 24B can be press contacted with each other in the folding position, the intermediate position and the reverse folding position. Accordingly, even if a backlash is present between the flanks of the first and second gears 24A, 24B, the reception section 3 can be prevented from rattling by a portion equal to the backlash in the folding position, the intermediate position and the reverse folding position.

Since the first and second hinge members 23A, 23B and the first and second gears 24A, 24B are separately formed from the transmission section 2 and the reception section 3 of a portable telephone set, it is not necessary to form the hinge members 23A, 23B and the gears 24A, 24B at the same time the casings of the transmission section 2 and the reception section 3 are formed. Accordingly, a portable telephone set can be manufactured at a low cost. Moreover, when the reception section 3 is located in the predetermined first restricting range between the folding position and the intermediate position and in the predetermined second restricting range between the intermediate position and the reverse folding position, the reception section 3 can be stopped in an optional position.

It should be noted that the present invention should not be limited to the above-mentioned embodiments but many changes and modifications can be made without departing from the gist of the invention.

For example, in the above-mentioned embodiments, a biaxial hinge device according to the present invention is applied to a portable telephone set. However, a biaxial hinge device according to the present invention can also be applied to other portable equipments such as a notebook type personal computer and the like.

Moreover, contrary to the manner in the above-mentioned embodiments, it is accepted that the first hinge member 23A is connected to the reception section 3 and the second hinge member 23B is connected to the transmission section 2.

INDUSTRIAL APPLICABILITY

A biaxial hinge device according to the present invention can be used for a portable equipment such as a portable telephone set and a notebook type personal computer.

**Claims**

1. A biaxial hinge device comprising a hinge main body, a first hinge shaft turnably supported by said hinge main body, a second hinge shaft arranged parallel to said first hinge shaft and turnably supported by said hinge main body, a first gear non-turnably disposed at said first hinge shaft and a second gear non-turnably disposed at said second hinge shaft and meshed with said first gear, first turn biasing means adapted to turn bias said first hinge shaft in one direction when said first hinge shaft is located in a predetermined first position being disposed at least at one of between said hinge main body and said first hinge shaft and between said hinge main body and said second hinge shaft.

2. A biaxial hinge device according to claim 1, wherein second turn biasing means adapted to turn bias said first hinge shaft in the other direction when said first hinge shaft is located in a predetermined second position away from said first position in a peripheral direction is disposed at least at one of between said hinge main body and said first hinge shaft and between said hinge main body and said second hinge shaft.

3. A biaxial hinge device according to claim 2, wherein first turn restricting means adapted to restrict turn of said first hinge shaft with respect to said hinge main body with a predetermined force when said first hinge shaft is located in a predetermined restriction range between said first position and said second position is disposed between said hinge main body and said first hinge shaft, and second turn biasing means adapted to restrict turn of said second hinge shaft with respect to said hinge main body with a predetermined force when said first hinge shaft is located in said restriction range is disposed between said hinge main body and said second hinge shaft.

4. A biaxial hinge device according to claim 3, wherein third turn biasing means adapted to turn bias said first hinge shaft either in said one or the other direction when said first hinge shaft is located in a predetermined intermediate position between said first position and said second position is disposed at one of between said hinge main body and said first hinge shaft and between said hinge main body and said second hinge shaft, and turn prohibiting means adapted to prohibit said first hinge shaft from being turned by a turn biasing force of said third turn biasing means with a predetermined prohibiting force when said first hinge shaft is located in said intermediate position is disposed at the other.

5. A biaxial hinge device according to claim 4, wherein first turn restricting means adapted to restrict turn of said first hinge shaft with respect to said hinge main body with a predetermined force when said first hinge shaft is located in a predetermined first restriction range between said first position and said intermediate position and when said first hinge shaft is located in a predetermined second restriction range between said intermediate position and said second position is disposed at least at one of between said hinge main body and said first hinge shaft and between said hinge main body and said second hinge shaft, and second turn restricting means adapted to restrict turn of said second hinge shaft with respect to said hinge main body with a predetermined force when said first hinge shaft is located in said first and second restriction ranges is disposed between said hinge main body and said second hinge shaft.

6. A biaxial hinge device according to one of claims 1 through 5, wherein said first hinge shaft is provided at one end part thereof with a first attachment part, and said second hinge shaft is provided at one end part thereof with a second attachment part.

7. A biaxial hinge device according to claim 6, wherein said hinge main body is provided at a part thereof located on the same axis as the first hinge shaft with a third attachment part, and said hinge main body is provided at a part thereof located on the same axis as said second hinge shaft with a fourth attachment part.

## FIG. 1

## FIG. 2

FIG. 3

FIG. 4

# FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22 (A)

28E (28F)　28e (28f)　70　27A (27B)　28e (28f)

α

23a

FIG. 22 (B)

60　27A (27B)

28G (28H)　28g (28h)

β　β

23a

50

27A (27B)

FIG. 23

28C (28D)　28c (28d)

23a

<div align="center">

**INTERNATIONAL SEARCH REPORT**

</div>

| | International application No. |
|---|---|
| | PCT/JP2005/000577 |

| A. CLASSIFICATION OF SUBJECT MATTER |
|---|
| Int.Cl$^7$  F16C11/04, 11/10, G06F1/16, H04M1/02, H05K5/02 |
| According to International Patent Classification (IPC) or to both national classification and IPC |

| B.  FIELDS SEARCHED |
|---|
| Minimum documentation searched (classification system followed by classification symbols) |
| Int.Cl$^7$  F16C11/04, 11/10, G06F1/16, H04M1/02, H05K5/02 |

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C.  DOCUMENTS CONSIDERED TO BE RELEVANT |
|---|

| Category* | Citation of document, with indication, where appropriate, of the relevant passages | Relevant to claim No. |
|---|---|---|
| Y<br>A | JP 3083003 U  (Eihotatsu Kofun Yugen Koshi),<br>17 October, 2001 (17.10.01),<br>Par. Nos. [0010] to [0013], [0016], [0023];<br>Figs. 1 to 7<br>(Family: none) | 1-3<br>4-7 |
| Y<br>A | JP 2003-239945 A  (Sugatsune Kogyo Co., Ltd.),<br>27 August, 2003 (27.08.03),<br>Par. Nos. [0019] to [0020]; Fig. 9<br>& CN 1439816 A | 1-3<br>4-7 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 April, 2005 (11.04.05) | 26 April, 2005 (26.04.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2005/000577 |

C (Continuation). DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 165298/1978(Laid-open No. 80558/1980) (Sony Corp.), 03 June, 1980 (03.06.80), Page 3, line 8 to page 5, line 20 (Family: none) | 1-2 |
| P,Y | JP 2004-308710 A (Sugatsune Kogyo Co., Ltd.), 04 November, 2004 (04.11.04), Full text; Figs. 17 to 26 & WO 2004/090355 A1 | 1-2 |
| A | JP 2003-120653 A (Ohashi Technica Inc. et al.), 23 April, 2003 (23.04.03), Par. Nos. [0020] to [0022]; Fig. 6 & WO 2003/033924 A1 | 1-4 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5363089 A